# EUROPÄISCHE PATENTSCHRIFT

(11) **EP 0 748 154 B1**
(45) Veröffentlichungstag und Bekanntmachung des Hinweises auf die Patenterteilung: **21.03.2001**
(21) Anmeldenummer: 95942031.6
(22) Anmeldetag: 21.12.1995
(51) Int. Cl.: A01D 34/00

(54) **MÄH- UND MULCHGERÄT**
MULCHING MOWER
DISPOSITIF DE FAUCHAGE ET DE PAILLAGE

(30) Priorität: 29.12.1994 DE 9420889 U
(43) Veröffentlichungstag der Anmeldung: 18.12.1996
(73) Patentinhaber: Wiedenmann GmbH, 89192 Rammingen (DE)
(72) Erfinder:
(74) Vertreter: Flügel, Otto, Dipl.-Ing.
(86) Internationale Anmeldenummer: DE9501832
(87) Internationale Veröffentlichungsnummer: WO9620584

(56) Entgegenhaltungen:
- EP-A- 0 642 730
- WO-A-92/02121
- US-A- 2 663 984
- US-A- 4 205 512
- US-A- 4 226 074
- US-A- 4 890 446
- US-A- 5 205 112
- US-A- 5 212 938
- US-A- 5 267 429

## Beschreibung

Die Erfindung betrifft ein Mähgerät mit wenigstens zwei jeweils um eine vertikale Achse rotierend angetriebenen Sichelmähblättern mit - vorzugsweise zwei - symmetrisch zur Achse angeordneten Mähschneiden, insbesondere mit in den Eckbereichen nach oben weisenden Abwinkelungen, welche Mähblätter in einem Mähergehäuse mit in Heckrichtung (Rückwärtsfahrtrichtung) erfolgendem Mähgutauslaß angeordnet und in Auswurfrichtung je von einer Wandung eingefaßt sind, welche Wandungen in ihren aneinander angrenzenden Wandungsbereichen Aussparungen aufweisen und jeweils eine rampenförmige Ableitvorrichtung umfassen, die die Bewegungsbahn des geschnittenen Gutes aus der Rotationsebene oberhalb der Mähschneiden des Mähblattes nach unten hin zurückleitet,

Mähgeräte dieser Art sind in vielfältiger Ausfertigung bekannt. Es besteht jedoch das Bedürfnis, das Mähgut nicht nur zu schneiden, sondern auch weitergehend zu zerkleinern, weil das damit entstehende Mulchgut für die Düngung des Bodens günstig ist. Das bedeutet, daß das gemähte Gut in dieser zerkleinerten Aufbereitung vom geschnittenen Rasenboden nicht mehr entfernt, sondern in ökologisch günstiger Weise in dieser zerkleinerten Form liegengelassen werden kann. Dadurch erspart man sich nicht nur die Entsorgung des geschnittenen Gutes, das zerkleinerte Gut dient in dieser mulchfähigen Form sogar noch der Bodenaufbereitung.

Ein Mähgerät der eingangs genannten Art offenbart die WO 92/02121, das zum Zwecke des Mulchens den Mähblättern zugeordnete Ableitvorrichtungen aufweist, die in die Bewegungsbahn des geschnittenen Gutes oberhalb der Rotationsebene der Mähschneiden derart hineinragen, daß das geschnittene Gut in den Bereich der Messer zurückgeführt sind. Die Zurückführung bleibt damit auf den Bereich der Mähschneiden des jeweils zugehörigen Mähwerkes begrenzt, obwohl die die Mähschneiden bzw. Mähblätter umgebenden Wandungen in ihren Angrenzbereichen durchbrochen sind. Diese Durchbrechungen dienen der möglichst nahen Zuordnung der äußeren Durchmesser der Mähblätter bzw. Mähschneiden, ohne daß dadurch ein Übertritt des Mähgutes von dem umwandeten Bereich des einen Mähblattes zu dem anderen gelehrt wird. Ähnliches ist aus der US 5,212,938 bekannt.

Der Erfindung liegt daher die Aufgabe zugrunde, ein Mähgerät der eingangs genannten Art derart auszubilden, daß aus dem geschnittenen Gut ein mulchfähiges Produkt geschaffen wird.

Diese Aufgabe wird erfindungsgemäß dadurch gelöst, daß die Ableitvorrichtung als Überleitung für das geschnittene Gut in die als Übergangsbereich zwischen einem und dem anderen Mähblatt ausgebildeten Aussparungen eingreifend ausgebildet ist.

In bevorzugter Ausführung ist die Wandung ein- oder mehrteilig senkrecht zur Ebene des zu bearbeitenden Bodens einstellbar; insbesondere ist die Wandung zweiteilig ausgebildet, nämlich derart, daß ein dem zu bearbeitenden Boden näher zugewandtes Wandungsteil gegenüber einem mähergehäusefesten Basisteil verstellbar ist, vorzugsweise über senkrecht zum Boden gerichtete Langlochausbildungen und diese durchgreifende Schraubverbindungen.

Die Messer des Mähblattes, insbesondere ausgebildet als zwei diametral entgegengesetzt von der Rotationsachse abstrebende Messer, sind bevorzugt zumindest teilweise derart "nach oben" abgebogen, daß sich ein das zu mähende Gut aufrichtender Luftzug ergibt, d.h. eine Strömung in Richtung etwa senkrecht zur Ebene des zu mähenden Gutes. Unter diesem Einfluß wird das gemähte Gut nach oben über die Mähebene des Mähblattes hinaus bewegt. Um nun dieses gemähte Gut zum Zwecke der weiteren Zerkleinerung im Sinne einer Mulchung erfassen zu können, ist in der bevorzugten Ausführung mit mehreren Mähblättern beim Übergang von einem zum anderen Mähblatt eine Ableitvorrichtung vorgesehen, dergestalt, daß das gemähte Gut zum Boden hin, d.h. in den Bereich des Nachbarmähblattes geleitet wird. Diese Umlenkreinrichtung ist bevorzugt als zum Boden hin gerichtete dachförmige Auswölbung ausgebildet, insbesondere als Blechteil im Übergangsbereich zwischen einem und dem benachbarten Mähblatt im Querschnitt dreieckförmig befestigt an der oberen Begrenzung des Mähwerkgehäuses.

Aufgrund dieser besonderen Maßnahme der Umlenkung des bereits geschnittenen Gutes wird das wiederholte Schneiden dieses Gutes, insbesondere Gras, bewirkt, so daß ein besser verrottungsfähiges und damit als Dünger dienendes Schnittgut entsteht, das im Gegensatz zu langstieligem Schnittgut nicht entfernt werden muß, sondern auf der gemähten Bodenfläche belassen werden kann und als Dünger dient.

Die einerseits aufgrund der Mähmessergestaltung - teilweise nach oben abgebogen - bewirkte "Aufstellung" des zu mähenden Gutes einerseits und die Umlenkung des Erstschnittgutes in den Bereich des Mähblattes andererseits, insbesondere benachbarter Art, bewirkt die über die Mähung hinausgehende Zerkleinerung des gemähten Gutes und hat damit die angestrebte Mulchwirkung d.h. das Mähgut bleibt als "Dünger" auf dem gemähten Boden liegen.

Weitere Merkmale und Einzelheiten der Erfindung ergeben sich aus den Unteransprüchen in Verbindung mit in der Zeichnung wiedergegebenen Ausführungsbeispielen. Es zeigen:
Figur 1: eine vom Boden des zu mähenden Gutes aus gesehene Aufsicht auf ein Mähgerät mit drei Mähblättern;
Figur 2: eine Schnittansicht durch ein Gerät nach Maßgabe der Figur 1
Figur 3: eine Teilansicht nach der Linie III-III in Figur 1 schematisiert

In einem Gehäuse 1, das schematisch in der vom Boden aus gesehenen Unteransicht des Ausführungsbeispieles angedeutet ist, befinden sich drei Mähwerkzeuge 2, deren jedes ein um eine vertikale Achse 3 rotierend antreibbares Messerpaar 4 aufweist. Geräte dieser Art sind grundsätzlich bekannt. In Eckbereichen 5 sind die Messer mit nach oben hin gerichteten Abwinklungen 6 versehen, die einen nach oben gerichteten Luftzug bewirken. Das dargestellte Mähgerät ist beispielsweise als Frontgerät ausgebildet, über ein Hebelgestänge insbesondere eine Parallellenkeranordnung an einem Traktor oder dergleichen angeordnet und läuft mit Stützrädern 7 auf dem zu mähenden Boden ab.

Die drei Mähblätter 4 gemäß Ausführungsbeispiel sind von Frontwandungen 8 und Heckwandungen 9 eingefasst. Letztere verhindern, daß das von den Mähblättern 4 - Messern - gemähte Schnittgut unmittelbar durch die dynamische Auswurfbewegung der Messer in den Heckbereich des Mähgerätes austritt; es wird vielmehr durch die Heckwandungen 9 dieser sofortige Austritt verhindert und dafür gesorgt, daß das geschnittene Gut einem wiederholten Zerkleinerungsvorgang ausgesetzt wird, sei es durch das schneidende Messerpaar 4 selbst oder durch das benachbarte Messerpaar 4.

Da aufgrund der für die schnittfähige, nach oben hin gerichtete Ausrichtung des zu schneidenden Gutes vorgesehenen Abwinklungen der Schneidmesser das geschnittene Gut vom Boden fort beaufschlagt wird, ist in besonders bevorzugte Ausführung der Erfindung eine Ableitvorrichtung vorgesehen, die die Bewegungsbahn des geschnittenen Gutes aus der Rotationsebene oberhalb der Messer 4 des Mähwerkzeuges nach unten hin zurückgeleitet, so daß insbesondere bei Übergang von einem Mähblatt (Mähmesserpaar 4) - zum nächsten das vom ersten Messerpaar 4 geschnittene Gut in die Umlaufbahn des benachbarten Messerpaares 4 gelangt. Auf diese Weise wird sichergestellt, daß keine Verstopfungen auftreten und daß das geschnittene Gut vom Nachbarwerkzeug tatsächlich weiterzerkleinert wird.

Durch die Heckwandungen 9 wird verhindert, daß sich das Schnittgut diesem weiteren Zerkleinerungsvorgang entzieht. Andererseits wird durch den Abstand vom Boden des zu mähenden Gutes sichergestellt, daß das geschnittene und anschließend weiterzerkleinerte - gehäckselte - Gut auf den Boden zurückgelangt, so daß die Düngewirkung durch dieses kleingeschnittene Gut - Mulchung - zurückgelangt.

In bevorzugter Ausführung der Erfindung läßt sich die Heckwandung 9 hinsichtlich des Abstandes zum Boden verändern, insbesondere dadurch, daß ein dem Boden zugewandter Wandungsteil gegenüber einem gehäuseefesten Basisteil höhenverstellbar ausgebildet ist. In weiterhin bevorzugter Ausführung ist im übrigen vorgesehen, die gesamte Heckwandung 9 wahlweise ein- und auszubauen, so daß man sowohl den vorgeschilderten Mulchvorgang als auch einen normalen Mähvorgang mit heckseitigem Auswurf ohne anschließende Zerkleinerung des Mähgutes einstellen kann.

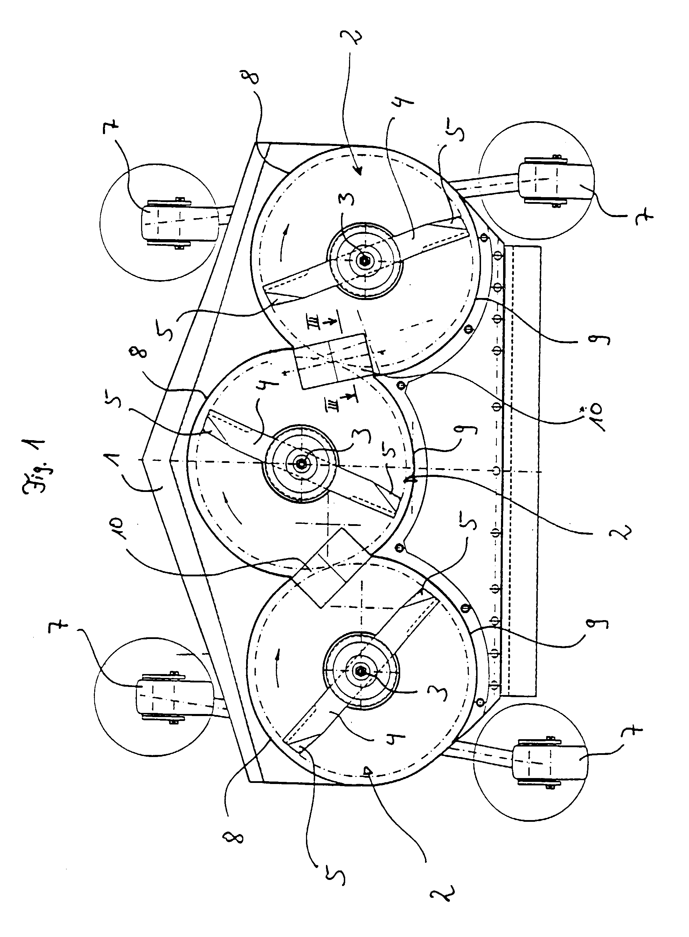

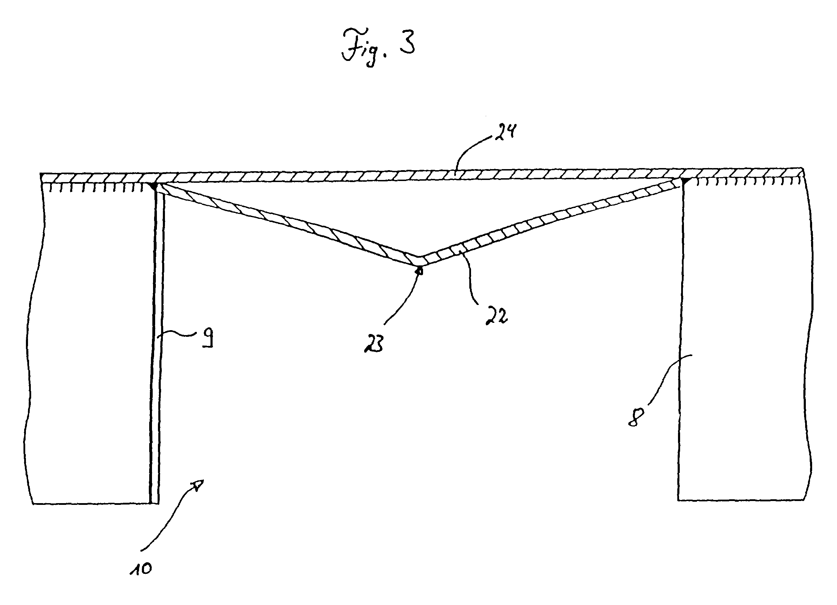

Die bei Auftriebbewegung durch die Abwicklungen der Mähmesserpaare 4 erforderliche Ablenkung des Mähgutes befindet sich in besonders bevorzugter Ausführung der Erfindung im Übergangsbereich jeweils zwischen zwei Mähmesserpaaren 4, dergestalt - wie Figur 1 zeigt - daß das in Umfangsrichtung des jeweils vorhergehenden Messerpaares 4 insoweit tangential beförderte Schnittgut in den Umlaufbereich des in Förderrichtung nachgeschalteten Mähmesserpaares 4 gelangt. Diese Überleitung 10 ist bevorzugt als dachförmiges Blech vorgesehen, das im vom Boden aus gesehenen oberen Begrenzungsbereich der die Messerpaare 4 begrenzenden Gehäusebereichen angeordnet ist, wie dies Figur 1 und Figur 3 zeigen. Diese Überleitung 10 muß nicht dachförmig ausgebildet sein, sie könnte auch die Form einer Rampe aufweisen. In besonders bevorzugter Ausführung ist dieses rechteckförmige Überleitungsblech 10 mit diagonal einander gegenüberliegenden Eckbereichen angrenzend in die die Mähmesserpaare 4 umgreifenden Gehäusewandungen 8,9 eingeschaltet, wie dies Figur 1 zeigt.

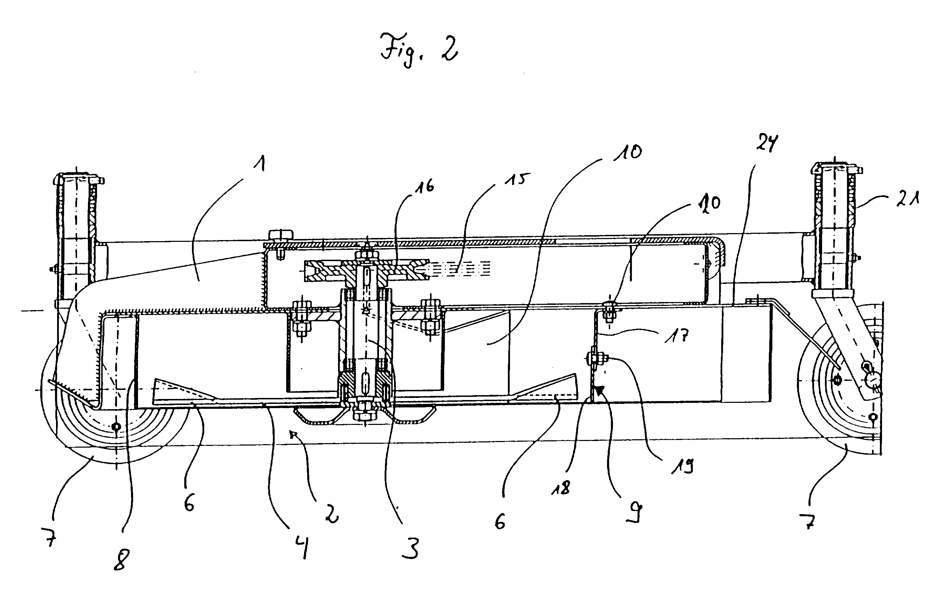

Aus der Figur 2 ist zu erkennen, daß jedes Messerpaar 4 über einen Riemen 15 angetrieben ist, der auf eine Riemenscheibe 16 wirkt, welche drehfest an dem Ende der vertikalen Achse 3 angeordnet ist, daß dem Messerpaar 4 gegenüberliegt. Darüberhinaus ist aus Figur 2 zu erkennen, daß die Heckwandung 9 zweiteilig ausgebildet ist. Die Heckwandung 9 besteht aus einem ersten, im Querschnitt L-förmig ausgebildeten Element 17 und einem zweiten, sich an das L-förmige Element 17 anschließenden Element 18, welches im Querschnitt rechteckig ausgebildet ist. Das Element 18 ist an dem L-förmigen Element 17 mit einer Vielzahl von Schraubverbindungen 19 in derart befestigt, daß nach Lösen der Schraubverbindungen 19 das Element 18 relativ zu dem L-förmigen Element 17 bewegbar ist. Hierdurch kann der Abstand der Heckwandung 9 zum Boden eingestellt werden.

Das L-förmige Element 17 ist über Schraubverbindungen 29 am Mähergehäuse 1 angeordnet, wobei der kürzere Schenkel des L-förmigen Elementes 17 an einem plattenförmigen Bauteil des Gehäuses 1 anliegt.

Wie ferner aus den Figuren 1 und 2 zu erkennen ist, sind vier Stützräder 7 an dem Gehäuse 1 befestigt, wobei zumindest die heckseitigen Stützräder 7 in einem Lager 21 drehbar gelagert sind. Hierdurch wird die Kurvenbeweglichkeit des Mähgerätes erhöht.

Figur 3 zeigt die Ausgestaltung der Überleitung 10 zwischen zwei benachbarten Mähmesserpaaren 4. In der Figur 3 ist das dachförmige Blech 22 zu erkennen, welches sich in den Innenraum der Überleitung 10 erstreckt, wobei der Scheitelpunkt 23 im wesentlichen in gleichem Abstand zu den beiden vertikalen Begrenzungen der Überleitung 10, nämlich die Heckwandung 9 und die Frontwandung 8 angeordnet ist. Hierbei ist darauf hinzuweisen, daß es sich um die Heckwandung 9 des ersten Mähmesserpaares und um die Seitenwandung des zweiten, hierzu benachbarten Mähmesserpaares 4 handelt. Das dachförmige Blech 22 ist an einem Abdeckblech 24 des Gehäuses 1 angeschweißt. An diesem Abdeckblech 24 sind darüberhinaus die Heckwandung 9 und die Frontwandung 8 der Mähmesserpaare 4 befestigt. Ferner ist in dem Abdeckblech 24 für jedes Messerpaar 4 eine Bohrung angeordnet, durch welche die vertikalen Achsen 3 der Mähmesserpaare 4 verlaufen.

## Patentansprüche

1. Mähgerät mit wenigstens zwei jeweils um eine vertikale Achse rotierend angetriebenen Sichelmähblättern (2) mit - vorzugsweise zwei - symmetrisch zur Achse angeordneten Mähschneiden (4), insbesondere mit in den Eckbereichen (5) nach oben weisenden Abwinkelungen (6), welche Mähblätter in einem Mähergehäuse (1) mit in Heckrichtung (Rückwärtsfahrtrichtung) erfolgendem Mähgutauslaß angeordnet und in Auswurfrichtung je von einer Wandung (8, 9) eingefaßt sind, welche Wandungen in ihren aneinander angrenzenden Wandungsbereichen Aussparungen aufweisen und jeweils eine rampenförmige Ableitvorrichtung umfassen, die die Bewegungsbahn des geschnittenen Gutes aus der Rotationsebene oberhalb der Mähschneiden (4) des Mähblattes (2) nach unten hin zurückleitet,
**dadurch gekennzeichnet,**
daß die Ableitvorrichtung als Überleitung (10) für das geschnittene Gut in die als Übergangsbereich zwischen einem und dem anderen Mähblatt (2) ausgebildeten Aussparungen eingreifend ausgebildet ist.

2. Mähgerät nach Anspruch 1,
**dadurch gekennzeichnet,**
daß die Wandung in eine Heckwandung (9) und eine Frontwandung (8) unterteilt ist, wobei die Frontwandung (8) in Fahrtrichtung beim Mährvorgang vor dem Mähblatt (4) bzw. den Mähblättern (4) angeordnet und vorzugsweise mit dem Mähergehäuse (1) verschweißt ist.

3. Mähgerät nach Anspruch 2,
**dadurch gekennzeichnet,**
daß die Heckwandung (9) mit dem Mähergehäuse (4) mittelbar oder unmittelbar verschraubt ist.

4. Mähgerät nach Anspruch 1 oder 2,
**dadurch gekennzeichnet,**
daß die Wandung (8, 9), insbesondere die Heckwandung (9), ein- oder mehrteilig senkrecht zur Ebene des zu bearbeitenden Bodens verstellbar am Mähergehäuse (1) befestigt ist.

5. Mähgerät nach Anspruch 4,
**dadurch gekennzeichnet,**
daß die einstellbare Wandung (8, 9) mittels senkrecht zum Boden verlaufender Langlöcher und diese durchgreifender Schraubverbindungen (19) verstellbar ist.

6. Mähgerät nach einem der Ansprüche 1 bis 5,
**dadurch gekennzeichnet,**
daß die Überleitung (10) ein Überleitblech ist.

7. Mähgerät nach einem der Ansprüche 1 bis 5,
**dadurch gekennzeichnet,**
daß die Überleitung (10) als zum Boden hin gerichtet dachförmige Auswölbung 22), insbesondere mit V-förmigem Querschnitt, ausgebildet und vorzugsweise an der oberen Begrenzung des Mähergehäuses (1) befestigt ist.

8. Mähgerät nach Anspruch 7,
**dadurch gekennzeichnet,**
daß die Überleitung (10) mit diagonal einander gegenüberliegenden Eckbereichen angrenzend in die die Mähblätter (4) umgreifende Wandung (8, 9) eingeschaltet ist.

9. Mähgerät nach einem der Ansprüche 1 bis 8,
**dadurch gekennzeichnet,**
daß das Mähergehäuse (1) zumindest zwei, vorzugsweise vier Stützräder (7), hat von denen insbesondere zumindest eins, vorzugsweise zwei drehbeweglich in einer Lagerung (21) gehalten ist bzw. sind.

10. Mähgerät nach Anspruch 9,
**dadurch gekennzeichnet,**
daß die Stützräder (7) höhenverstellbar am Gehäuse (1) angeordnet sind.

## Claims

1. A mowing device with at least two mowing rotors (2), each driven in a rotating manner about a vertical axis, with preferably two mowing blades (4) disposed symmetrical to the axis, especially with upwardly-directed angled portions (6) in the corner areas (5), these mowing rotors being disposed in a mower housing (1) with the mowed material being discharged in the rearward direction (reverse travelling direction) and being bordered in the direction of discharge in each case by a wall (8, 9), these walls having recesses in their adjacent wall areas and in each case including a ramp-shaped outlet apparatus which guides the path of movement of the mowed material down from the plane of rotation above the mowing blades (4) of the mowing rotor (2), characterised in that the outlet apparatus, as a transfer facility (10) for the mowed material, is configured to engage into the recesses configured as a transition area between one mowing rotor (2) and another.

2. A mowing device according to claim 1, characterised in that the wall is subdivided into a rear wall (9) and a front wall (8), wherein the front wall (8) is disposed in front of the mowing blade (4) or the mowing blades (4) in the direction of travel during mowing, and is preferably welded to the mower housing (1).

3. A mowing device according to claim 2, characterised in that the rear wall (9) is directly or indirectly screwed to the mower housing (1).

4. A mowing device according to claim 1 or 2, characterised in that the wall (8, 9), especially the rear wall (9), is adjustably attached to the mower housing (1) in one or more parts perpendicular to the plane of the ground which is to be processed.

5. A mowing device according to claim 4, characterised in that the adjustable wall (8, 9) is adjustable by means of slots extending perpendicular to the ground and screw connections (19) which penetrate these slots.

6. A mowing device according to one of claims 1 to 5, characterised in that the transfer facility (10) is a metal transfer plate.

7. A mowing device according to one of claims 1 to 5, characterised in that the transfer facility (10) is configured with a roof-shaped convexity (22) directed towards the ground, especially with a V-shaped cross-section, and is preferably attached to the upper limit of the mower housing (1).

8. A mowing device according to claim 7, characterised in that the transfer facility (10) is included in the wall (8, 9) which embraces the mowing blades (4) with diagonal corner portions adjacent which are disposed opposite one another.

9. A mowing device according to one of claims 1 to 8, characterised in that the mower housing (1) has at least two, preferably four supporting wheels (7) of which in particular at least one, preferably two, is or are rotatably held in a mounting (21).

10. A mowing device according to claim 9, characterised in that the supporting wheels (7) are disposed on the housing (1) so that their height is adjustable.

## Revendications

1. Appareil de fauchage comportant au moins deux lames de fauchage (2) tournant autour d'un axe vertical, avec de préférence deux arêtes de coupe (4) symétriques par rapport à l'axe et notamment des parties recourbées (6) tournées vers le haut au niveau des coins (5), les lames de coupe étant logées dans un carter (1) avec une sortie de produit se faisant dans la direction arrière (direction de recul) en étant enserrées chaque fois dans la direction d'éjection par une paroi (8, 9), les parois comportant des découpes dans leurs zones adjacentes et chaque fois un dispositif déflecteur en forme de rampe pour dévier la trajectoire du produit coupé par rapport au plan de rotation au-dessus des arêtes de coupe (4) de la lame de coupe (2), vers le bas,
caractérisé en ce que
le dispositif déflecteur est réalisé en forme de passage (10) du produit coupé dans la zone transitoire en passant dans les découpes réalisées entre l'une et l'autre lame de coupe (2).

2. Appareil selon la revendication 1,
caractérisé en ce que
la paroi est subdivisée en une paroi arrière (9) et une paroi avant (8), la paroi avant (8) se trouvant en amont de la lame de coupe (4) dans le sens du déplacement pour le fauchage ou en avant des lames de coupe (4), en étant de préférence soudée au carter (1) de l'appareil.

3. Appareil selon la revendication 2,
caractérisé en ce que
la paroi arrière (4) est vissée directement ou indirectement au carter (4).

4. Appareil selon l'une des revendications 1 ou 2,
caractérisé en ce que
la paroi (8, 9), en particulier la paroi arrière (9), est fixée au carter (1) en étant réalisée en une ou plusieurs parties, réglables perpendiculairement au plan du sol à travailler.

5. Appareil selon la revendication 4,
caractérisé en ce que
la paroi réglable (8, 9) comporte des trous oblongs perpendiculaires au sol et des liaisons à vis (19) réglables traversant ces trous.

6. Appareil selon l'une des revendications 1 à 5,
caractérisé en ce que
le passage (10) est une tôle de passage.

7. Appareil selon l'une des revendications 1 à 5,
caractérisé en ce que
le passage (10) est une partie bombée (12) en forme de toit dirigée vers le sol, notamment à section en forme de V, et fixée de préférence à la limite supérieure du carter (1).

8. Appareil selon la revendication 7,
caractérisé en ce que
le passage (10) est intégré avec des zones de coins opposées en diagonale, de manière adjacente à la paroi(8, 9) entourant les couteaux (4).

9. Appareil selon l'une des revendications 1 à 8,
caractérisé en ce que
le carter (1) comporte au moins deux et de préférence quatre roues d'appui (7) dont notamment une au moins et de préférence deux, sont montées mobiles en pivotement dans un palier (21).

10. Appareil selon la revendication 9,
caractérisé en ce que
les roues d'appui (7) sont montées réglables en hauteur sur le carter (1).
